(19) Europäisches Patentamt
European Patent Office
Office européen des brevets

(11) EP 4 345 115 A2

(12) **EUROPEAN PATENT APPLICATION**

(43) Date of publication:
**03.04.2024 Bulletin 2024/14**

(21) Application number: **23199401.3**

(22) Date of filing: **25.09.2023**

(51) International Patent Classification (IPC):
***C08F 210/16** (2006.01)* ***C08F 4/6592** (2006.01)*
***C08J 5/18** (2006.01)*

(52) Cooperative Patent Classification (CPC):
(C-Sets available)
**C08F 210/16;** C08F 4/65912; C08F 4/65916;
C08J 5/18 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.09.2022 KR 20220124015**

(71) Applicant: **DL Chemical Co., Ltd.**
**Seoul 03181 (KR)**

(72) Inventors:
- **Lee, Hee Jun**
**30062 Sejong-si (KR)**
- **Kim, Da Jung**
**34071 Daejeon (KR)**
- **Sohn, Byung Keel**
**34118 Daejeon (KR)**

(74) Representative: **Gulde & Partner**
**Patent- und Rechtsanwaltskanzlei mbB**
**Wallstraße 58/59**
**10179 Berlin (DE)**

# (54) POLYOLEFIN RESIN PREPARED USING HETEROGENEOUS CATALYST AND METHOD OF PREPARING SAME

(57) Proposed is a polyolefin resin having excellent processability, toughness, and bubble stability, thereby being useful for molding into shrinkage films, agricultural films, etc. A method of preparing the same polyolefin resin is also proposed.

EP 4 345 115 A2

(52) Cooperative Patent Classification (CPC): (Cont.)

C-Sets
**C08F 210/16, C08F 4/6492;**
**C08F 210/16, C08F 4/65904;**
C08F 210/16, C08F 4/65925, C08F 4/65927;
C08F 210/16, C08F 210/14, C08F 2500/06,
C08F 2500/10, C08F 2500/11, C08F 2500/12,
C08F 2500/26, C08F 2500/27, C08F 2500/09

**Description**

CROSS REFERENCE TO RELATED APPLICATION

The present application claims priority to Korean Patent Application No. 10-2022-0124015, filed September 29, 2022, the entire contents of which is incorporated herein for all purposes by this reference.

BACKGROUND OF THE DISCLOSURE

1. Field of the Disclosure

The present disclosure relates to a polyolefin resin prepared using a heterogeneous catalyst and a method of preparing the same. More particularly, the present disclosure relates to a linear low-density polyethylene copolymer having excellent processability, toughness, and bubble stability, and a method of preparing the same.

2. Description of the Related Art

Linear low-density polyethylene (LLDPE) is produced by copolymerizing ethylene and alpha-olefins (commercially, 1-butene, 1-hexene, and 1-octene are mainly used) at low pressure using a polymerization catalyst, and it is a resin with a narrow molecular weight distribution and almost no long-chain branches (LCB).

LLDPE is excellent in physical properties such as breaking strength, strain%, tear strength, and dart falling impact strength while having a density level similar to that of low-density polyethylene (LDPE) manufactured by the conventional high-pressure polymerization method.

Therefore, LLDPE is increasingly used in applications such as stretch films and overlap films to which it is difficult to apply conventional low-density polyethylene (LDPE) or high-density polyethylene (HDPE). These applications require excellence in film processability, breaking strength, tear strength, dart falling impact strength, and haze.

In the case of ZN-LLDPE prepared using an existing Ziegler-Natta catalyst, the processability is excellent due to its wide molecular weight distribution, but the physical properties are poor, whereas in the case of mLLDPE prepared using a metallocene catalyst with a single active site, the physical properties are excellent, but the processability is poor due to its narrow molecular weight distribution.

In order to solve the problem of low processability, research has been conducted on preparation of polyolefins having a wide molecular weight distribution or a multimodal molecular weight distribution.

Among them, one method is a melt blending method or post-reactor technique in which two or more polyolefins having different molecular weights are blended together before or during processing. For example, US Patent No. 4,461,873 discloses a method of physically blending two polymers having different properties to produce a bimodal polymeric blend.

Another approach is to use a multi-stage reactor. The method uses two or more reactors, in which a first polymer component having one of two different molecular weight distributions is produced under predetermined conditions in a first reactor, the first polymer component is transported to a second reactor, and a second polymer component having a molecular weight distribution different from that of the first polymer component is produced in the second reactor under reaction conditions different from those of the first reactor.

On the other hand, LLDPE containing long chain branches has been studied to achieve good bubble stability and low load during blown film processing. LLDPE having such long-chain branches is advantageous for processing because the side chains are entangled with each other in a similar form to LDPE. However, LLDPE having excessively many long-chain branches has a problem of low toughness.

Accordingly, it is necessary to develop a linear low-density polyethylene long-chain branches, thereby having excellent processability, toughness, and bubble stability.

Documents of Related Art

Patent Document

(Patent Document 1) US Patent No. 4,461,873 (July 24, 1984)

SUMMARY OF THE DISCLOSURE

In order to solve the above problems, the present disclosure provides a polyolefin resin having excellent processability, toughness, and bubble stability, thereby being useful for molding into shrinkage films, agricultural films, etc.,

and to a method of preparing the same.

However, the objective is illustrative, and the technical spirit of the present disclosure is not limited thereto.

A first aspect of the present disclosure for achieving the above object relates to a polyolefin resin satisfying Expression 1 below.

[Expression 1]

$$MT > 0.01 \times (SR/MIE) + 2.97$$

In Expression 1 above, MT is the melt tension (gf) of a polyolefin resin, SR is the ratio of melt flow index of a polyolefin resin (SR = MIF/MIE), MIE is the melt flow index (g/10 min) measured according to ASTM D1238 (190°C, 2.16 kg), and MIF is the high-load melt flow index (g/10min) measured according to ASTM D1238 (190°C, 21.6 kg) .

In the first aspect, the polyolefin resin may be prepared using a supported metallocene catalyst composition in which a zirconium-based organometallic compound, a hafnium-based organometallic compound, and an aluminoxane-based compound are supported on a carrier.

In the first aspect, the supported metallocene catalyst composition may have a hafnium-to-zirconium weight ratio in a range of 1:0.1 to 1:1.2.

In the first aspect, the zirconium-based organometallic compound may satisfy Formula 1 below.

[Formula 1]

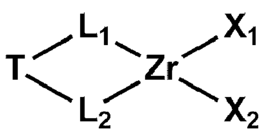

In Formula 1,

$L_1$ and $L_2$ are each independently cyclopentadienyl, indenyl, tetrahydroindenyl, or fluordenyl; T is Al, Si, Sn, or a hydrocarbon group having 1 to 4 carbon atoms; $X_1$ and $X_2$ are each independently a halogen element or a hydrocarbon group having 1 to 10 carbon atoms; $L_1$, $L_2$, and T are each independently further substituted or unsubstituted with hydrogen, halogen, $C_1$-$C_{20}$ hydrocarbyl, $C_1$-$C_{20}$ alkoxy, or any combination thereof, and adjacent substituents are each independently linked to $L_1$ and $L_2$ to form a fused ring structure.

In the first aspect, the hafnium-based organometallic compound may satisfy Formula 2 below.

[Formula 2]

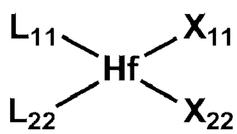

In Formula 2, $L_{11}$ and $L_{22}$ are each independently cyclopentadienyl, indenyl, tetrahydroindenyl, or fluordenyl; $X_{11}$ and $X_{22}$ are each independently a halogen or a hydrocarbon group having 1 to 10 carbon atoms; $L_{11}$ and $L_{22}$ are each independently further substituted or unsubstituted with hydrogen, halogen, $C_1$-$C_{20}$ hydrocarbyl, $C_1$-$C_{20}$ alkoxy, or any combination thereof, and adjacent substituents are each independently linked to $L_{11}$ and $L_{22}$ to form a fused ring structure.

In the first aspect, the aluminoxane-based compound may be at least one selected from the group consisting of compounds represented by Formulas 3 to 5 below.

[Formula 3]

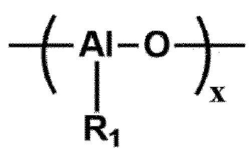

[Formula 4]

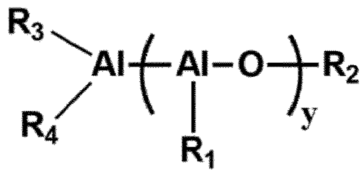

[Formula 5]

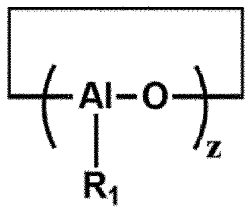

In Formulas 3 to 5, $R_1$ to $R_4$ are each independently a linear or branched alkyl group having 1 to 10 carbon atoms, x and y are each independently an integer in a range of 1 to 50, and z is an integer in a range of 3 to 50.

In the first aspect, the carrier may be at least one selected from the group consisting of silica, alumina, silica-alumina, clay, and modified clay.

In the first aspect, in the polyolefin resin, the number of long chain branches per 1,000,000 carbon atoms (LCB/$10^6$ carbon atoms) measured under the condition of 0.01 rad/s shear viscosity may be in a range of 0.1 to 4.4.

In the first aspect, the polyolefin resin may have a density (D ) of 0.910 to 0.940 g/$cm^3$ as measured by a density gradient column method according to ASTM D1505, and a melt flow index measured according to ASTM D1238 (190°C, 2.16 kg) (MIE) is 0.1 to 5.0 g/10 min; (iii) a high-load melt flow index (MIE) measured according to ASTM D1238 (190°C, 21.6 kg) of 17 to 100 g/10 min, and a melt flow index ratio (SR = MIF / MIE) of 35 to 55. In addition, the ratio (Mw/Mn) of the weight average molecular weight (Mw) and the number average molecular weight (Mn) measured by gel permeation chromatography may be in a range of 2.0 to 10.0, more preferably in a range of 2.5 to 5.0, and the ratio (Mz/Mw) of the Z-average molecular weight (Mz) and the weight average molecular weight (Mw) measured by gel permeation chromatography may be in a range of 1.0 to 5.0 and more preferably 2.0 to 3.5.

In the first aspect, the polyolefin resin may have a comonomer orthogonal index (COI) value of 2 to 10 calculated by Expression 2 below.

[Expression 2]

$$COI = (\text{number of SCBs in Mz} - \text{number of SCBs in Mn}) / (\log Mz - \log Mn)$$

In Expression 2 above, the number of SCBs in Mz is the average number of side branches derived from comonomers per 1,000 carbon atoms in Z-average molecular weight (Mz), the number of SCBs in Mn is the number of side branches derived from comonomers per 1,000 carbon atoms in number-average molecular weight (Mn), and log Mz and log Mn are the log values of Mz or Mn, respectively.

A second aspect of the present disclosure relates to a method of preparing a polyolefin resin, the method including:

a) synthesizing a prepolymer by prepolymerizing a prepolymerization composition including an ethylene monomer, an alpha olefin monomer having 3 or more carbon atoms, and a supported metallocene catalyst composition in a slurry polymerization reactor; and
b) supplying a main polymerization composition including the prepolymer, an ethylene monomer, and an alpha olefin monomer having 3 or more carbon atoms to a gas phase reactor, and polymerizing the main polymerization composition into a polyolefin resin,

in which the supported metallocene catalyst composition has a form in which a zirconium-based organometallic compound, a hafnium-based organometallic compound, and an aluminoxane-based compound are supported on a carrier.

In the aspect, the prepolymer composition may include 80 to 99.9 wt% of the ethylene monomer and 0.1 to 20 wt% of the alpha olefin monomer having 3 or more carbon atoms, based on the total amount of monomers.

In the second aspect, the alpha olefin having 3 or more carbon atoms may be at least one selected from the group consisting of propylene, 1-butene, 1-pentene, 4-methyl-1-pentene, 1-hexene, 1-heptene, 1-octene, 1-decene, 1-undecene, 1-dodecene, 1-tetradecene, 1-hexadecene, 1-octadecene, and 1-eicosene.

Since the polyolefin resin according to the present disclosure is prepared using a heterogeneous catalyst in which a zirconium-based organometallic compound satisfying Formula 1 and a hafnium-based organometallic compound satisfying Formula 2 are supported in an appropriate ratio, the polyolefin resin has excellent processability, toughness, and bubble stability and thus can be used for shrinkage films, agricultural films, and the like.

BRIEF DESCRIPTION OF THE DRAWINGS

FIG. 1 is a graph showing the results of analysis of melt tension (gf) analysis data of each film made of polyolefin resins of Examples 1 to 3 and Comparative Examples 1 to 7 of the present disclosure.

DESCRIPTION OF THE PREFERRED EMBODIMENTS

Hereinafter, a polyolefin resin prepared using a heterogeneous catalyst and a method for preparing the same, according to the present disclosure, will be described in detail. The drawings described below are provided as examples to sufficiently convey the spirit of the present disclosure to those skilled in the art. Accordingly, the present disclosure is not limited to the drawings and may be embodied in other forms, and the drawings presented below may be exaggerated to clarify the spirit of the present disclosure. In the flowing description, unless otherwise defined, all terms including technical and scientific terms used herein have the same meaning as commonly understood by those who are ordinarily skilled in the art to which this disclosure belongs. Further, when it is determined that the detailed description of the known art related to the present disclosure might obscure the gist of the present disclosure, the detailed description thereof will be omitted.

Also, in this specification, terms such as first and second are used to describe various components, and the terms are used only for the purpose of distinguishing one component from another component. Terms used in this specification are merely for describing exemplary embodiments, and are not intended to limit the present disclosure. As used herein, the singular forms "a", "an", and "the" are intended to include the plural forms as well unless the context clearly indicates otherwise. It will be further understood that the terms "comprise", "include", or "have" when used in this specification specify the presence of stated features, regions, integers, steps, operations, elements and/or components, but do not preclude the presence or addition of one or more other features, regions, integers, steps, operations, elements, components and/or combinations thereof. Since the present disclosure can have various changes and various forms, specific embodiments will be exemplified and described in detail below. While specific embodiments of the present disclosure are described herein below, they are only for illustrative purposes and should not be construed as limiting to the present disclosure. Thus, the present disclosure should be construed to cover not only the specific embodiments but also cover all modifications, equivalents, and substitutions that fall within the concept and technical spirit of the present disclosure.

A first aspect of the present disclosure relates to a polyolefin resin satisfying Expression 1 below.

[Expression 1]

$$MT > 0.01 \times (SR/MIE) + 2.97$$

In Expression 1 above, MT is the melt tension (gf) of the polyolefin resin, SR is the melt flow index ratio of the polyolefin resin (SR = MIF/MIE), MIE is the melt flow index (g/10 min) measured according to ASTM D1238 (190°C, 2.16 kg), and MIF is the high-load melt flow index (g/10 min) measured according to ASTM D1238 (190°C, 21.6 kg) .

As described above, the polyolefin resin according to the present disclosure has excellent bubble stability because its melt tension (MT) is higher than 0.01 × (SR/MIE) + 2.97. In addition, the polyolefin resin has excellent processability and toughness, so it can be applied to shrinkage films, agricultural films, etc.

In order to obtain a polyolefin resin having high bubble stability by satisfying Expression 1, it is preferable to contain an appropriate amount of long chain branches (LCB). For this purpose, the polyolefin resin may be prepared using a supported metallocene catalyst composition in which a zirconium-based organometallic compound, a hafnium-based organometallic compound, and an aluminoxane-based compound are supported on a carrier.

In this case, the supported metallocene catalyst composition may have a hafnium-to-zirconium weight ratio of 1:0.1 to 1:1.2 and more preferably 1:0.1 to 1:1. When the weight ratio is within the range, the polyolefin resin may have an appropriate level of long chain branching.

More preferably, by properly selecting the type of zirconium-based organometallic compound and hafnium-based organometallic compound as well as adjusting the weight ratio of the hafnium element and the zirconium element, the polyolefin resin having the most desirable level of long chain branching can be obtained. In addition, when Expression 1 below is satisfied, the polyolefin resin can have more excellent bubble stability.

Specifically, the zirconium-based organometallic compound may satisfy Formula 1 below.

[Formula 1]

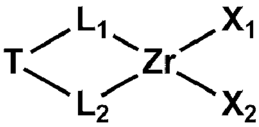

In Formula 1,

$L_1$ and $L_2$ are each independently cyclopentadienyl, indenyl, tetrahydroindenyl, or fluorodenyl;
T is Al, Si, Sn, or a hydrocarbon group having 1 to 4 carbon atoms;
$X_1$ and $X_2$ are each independently a halogen element or a hydrocarbon group having 1 to 10 carbon atoms;
$L_1$, $L_2$, and T are each independently further substituted or unsubstituted with hydrogen, halogen, $C_1$-$C_{20}$ hydrocarbyl, $C_1$-$C_{20}$ alkoxy, or any combination thereof, and adjacent substituents are each independently linked to $L_1$ and $L_2$ to form a fused ring structure.

In this case, the term *"hydrocarbyl"* as used herein is a hydrocarbon group that is composed of hydrogen and carbon, and it may be linear or branched alkyl, cycloalkyl, aryl, alkylaryl, arylalkyl, or a combination thereof. Specifically, it may be methyl, ethyl, propyl, butyl, amyl, isoamyl, hexyl, isobutyl, heptyl, octyl, nonyl, decyl, cetyl, 2-ethylhexyl, or phenyl. The "halogen" may refer to F, Cl, Br or I, and the "alkoxy" may refer to methoxy, ethoxy, propoxy, butoxy, or amyloxy. In addition, the expression that the substituents are each independently linked to $L_1$ and $L_2$ to form a fused ring structure means that, for example, hydrocarbon groups having substituted for cyclopentadienyl groups are linked to each other to form a ring such as tetrahydroindenyl.

As a specific example, the zirconium-based organometallic compound is any one or a combination of two or more selected from the group consisting of dimethylsilyl-bis(cyclopentadienyl) zirconium dichloride, dimethylsilyl-bis(methylcyclopentadienyl) zirconium dichloride, dimethylsilyl-bis(dimethyl cyclopentadienyl) zirconium dichloride, dimethylsilyl-bis(trimethyl cyclopentadienyl) zirconium dichloride, dimethylsilyl-bis(tetramethyl cyclopentadienyl) zirconium dichloride, dimethylsilyl-bis(methyl,ethylcyclopentadienyl) zirconium dichloride, dimethylsilyl-bis(diethylcyclopentadienyl) zirconium dichloride, dimethylsilyl-bis(methyl, propylcyclopentadienyl) zirconium dichloride, dimethylsilyl-bis(tetrahydroindenyl) zirconium dichloride chloride, dimethylsilyl-bis(indenyl) zirconium dichloride, dimethylsilyl-(methylindenyl) zirconium dichloride, dimethylsilyl-(ethylindenyl) zirconium dichloride, dimethylsilyl-(methyl,ethylindenyl) zirconium dichloride, dimethylsilyl-(methyl,propylindenyl) zirconium dichloride, dimethylsilyl-(methyl,butylindenyl) zirconium dichloride, dimethylsilyl-(propylindenyl) zirconium dichloride, dimethylsilyl-(butylindenyl) zirconium dichloride, dimethylsilyl-(isobutylindenyl) zirconium dichloride, dimethylsilyl-(phenylindenyl) zirconium dichloride, dimethylsilyl-bis(cyclopentadienyl) zirconium difluoride, dimethylsilyl-bis(methyl cyclopentadienyl) zirconium difluoride, dimethylsilyl-bis(dimethylcyclopentadienyl) zirconium difluoride, dimethylsilyl-bis(trimethylcyclopentadienyl) zirconium difluoride, dimethylsilyl-bis(tetramethyl cyclopentadienyl) zirconium difluoride, dimethylsilyl-bis(methyl,ethylcyclopentadienyl) zirconium difluoride, dimethylsilyl-bis(diethylcyclopentadienyl) zirconium difluoride, dimethylsilyl-bis(methyl,propylcyclopentadienyl) zirconium difluoride, dimethylsilyl-bis(tetrahydroindenyl) zirconium difluoride, dimethylsilyl-bis(indenyl) zirconium difluoride, dimethylsilyl-(methylindenyl) zirconium difluoride, dimethylsilyl-(ethylindenyl) zirconium difluoride, dimethylsilyl-(methyl,ethylindenyl) zirconium difluoride, dimethylsilyl-(methyl,propylindenyl) zirconium difluoride, dimethylsilyl-(methyl,butylindenyl) zirconium difluoride, dimethylsilyl-(propylindenyl) zirconium difluoride, dimethylsilyl-(butylindenyl) zirconium difluoride, dimethylsilyl-(isobutylindenyl) zirconium difluoride, dimethylsilyl-(phenylindenyl) zirconium difluoride, dimethylsilyl-bis(cyclopentadienyl) zirconium dibromide, dimethylsilyl-bis(methylcyclopentadienyl) zirconium dibromide, dimethylsilyl-bis(dimethylcyclopentadienyl) zirconium dibromide, dimethylsilyl-bis(trimethylcyclopentadienyl) zirconium dibromide, dimethylsilyl-bis(tetramethylcyclopentadienyl) zirconium dibromide, dimethylsilyl-bis(methyl,ethylcyclopentadienyl) zirconium dibromide, dimethylsilyl-bis(diethylcyclopentadienyl) zirconium dibromide, dimethylsilyl-bis(methyl,propylcyclopentadienyl) zirconium dibromide, dimethylsilyl-bis(tetrahydroindenyl) zirconium dibromide, dimethylsilyl-bis(indenyl) zirconium dibromide, dimethylsilyl-(methylindenyl) zirconium dibromide, dimethylsilyl-(ethylindenyl) zirconium dibromide, dimethylsilyl-(methyl,ethylindenyl) zirconium dibromide, dimethylsilyl-(methyl, propylindenyl) zirconium dibromide, dimethylsilyl-(methyl, butylindenyl) zirconium dibromide, dimethylsilyl-(propylindenyl) zirconium dibromide, dimethylsilyl-(butylindenyl) zirconium dibromide, dimethylsilyl-(isobutylindenyl) zirconium dibromide, dimethylsilyl-(phenylindenyl) zirconium dibromide, dimethylsilyl-bis(cyclopentadienyl) zirconium diiodide, dimethylsilyl-bis(methylcyclopentadienyl) zirconium diiodide, dimethylsilyl-bis(dimethylcyclopentadienyl) zirconium diiodide, dimethylsilyl-bis(trimethylcyclopentadienyl) zirconium diiodide, dimethylsilyl-bis(tetramethylcyclopentadienyl) zirconium diiodide, dimethylsilyl-bis(methyl,ethylcyclopentadienyl) zirconium diiodide, dimethylsilyl-bis(diethylcyclopentadienyl) zirconium diiodide, dimethylsilyl-bis(methyl,propylcyclopentadienyl) zirconium diiodide, dimethylsilyl-bis(tetrahydroindenyl) zirconium diiodide, dimethylsilyl-bis(indenyl) zirconium diiodide, dimethylsilyl-(methylindenyl) zirconium diiodide, dimethylsilyl-(ethylindenyl) zirconium diiodide, dimethylsilyl-(methyl,ethylindenyl) zirconium diiodide, dimethylsilyl-(methyl,propylindenyl) zirconium diiodide, dimethylsilyl-(methyl,butylindenyl) zirconium diiodide, dimethylsilyl-(propylindenyl) zirconium diiodide, dimethylsilyl-(butylindenyl) zirconium diiodide, dimethylsilyl-(isobutylindenyl) Zirconium diiodide, dimethylsilyl-(phenylindenyl) zirconium diiodide, diethylsilyl-bis(cyclopentadienyl) zirconium dichloride, diethylsilyl-bis(methylcyclopentadienyl) zirconium dichloride, di ethylsilyl-bis(dimethylcyclopentadienyl) zirconium dichloride, diethylsilyl-bis(trimethylcyclopentadienyl) zirconium dichloride, diethylsilyl-bis(tetramethylcyclopentadienyl) zirconium dichloride, diethylsilyl-bis(methyl,ethylcyclopentadienyl) zirconium dichloride, diethylsilyl-bis(diethylcyclopentadienyl) zirconium dichloride, diethylsilyl-bis(methyl,propylcyclopentadienyl) zirconium dichloride, diethylsilyl-bis(tetrahydroindenyl) zirconium dichloride, diethylsilyl-bis(indenyl) zirconium dichloride, diethylsilyl-(methylindenyl) zirconium dichloride, diethylsilyl-(ethylindenyl) zirconium dichloride, diethylsilyl-(methyl,ethylindenyl) zirconium dichloride, diethylsilyl-(methyl,propylindenyl) zirconium dichloride, diethylsilyl-(methyl,butylindenyl) zirconium dichloride , diethylsilyl-(propylindenyl) zirconium dichloride, diethylsilyl-(butylindenyl) zirconium dichloride, diethylsilyl-(isobutylindenyl) zirconium dichloride, diethylsilyl-(phenylindenyl) Zirconium dichloride, diethylsilyl-bis(cyclopentadienyl) zirconium difluoride, diethylsilyl-bis(methylcyclopentadienyl) zirconium difluoride, diethylsilyl-bis(dimethylcyclopentadienyl) zirconium difluoride, diethylsilyl-bis(trimethylcyclopentadienyl) zirconium difluoride, diethylsilyl-bis(tetramethylcyclopentadienyl) zirconium difluoride, diethylsilyl-bis(methyl,ethylcyclopentadienyl) zirconium difluoride, diethylsilyl-bis(diethylcyclopentadienyl) zirconium difluoride, diethylsilyl-bis(methyl,propylcyclopentadienyl) zirconium difluoride, diethylsilyl-bis(tetrahydroindenyl) zirconium difluoride, diethylsilyl-bis(indenyl) zirconium difluoride, diethylsilyl-(methylindenyl) zirconium difluoride, diethylsilyl-(ethylindenyl) zirconium Difluoride, diethylsilyl-(methyl,ethylindenyl) zirconium difluoride, diethylsilyl-(methyl,propylindenyl) zirconium difluoride, diethylsilyl-(methyl,butylindenyl) zirconium difluoride, diethylsilyl-(propylindenyl) zirconium difluoride, diethylsilyl-(butylindenyl) zirconium difluoride, diethylsilyl-(isobutylindenyl) zirconium difluoride, diethylsilyl-(phenylindenyl) zirconium difluoride, diethylsilyl-bis(cyclopentadienyl) zirconium dibromide, diethylsilyl-bis(methylcyclopentadienyl) zirconium dibromide, diethylsilyl-bis(dimethylcyclopenta dienyl) zirconium dibromide, diethylsilyl-bis(trimethylcyclopentadienyl) zirconium dibromide, diethylsilyl-bis(tetramethylcyclopentadienyl) zirconium dibromide, diethylsilyl-bis(methyl,ethylcyclopentadienyl) zirconium dibromide, diethylsilyl-bis(diethylcyclopentadienyl) zirconium dibromide, diethylsilyl-bis(methyl,propylcyclopentadienyl) zirconium dibromide, diethylsilyl-bis(tetrahydroindenyl) zirconium dibromide, diethylsilyl-bis(indenyl) zirconium dibromide, diethylsilyl-(methylindenyl) zirconium dibromide, diethylsilyl-(ethylindenyl) zirconium dibromide, diethylsilyl-(methyl,ethylindenyl) zirconium dibromide, diethylsilyl-(methyl,propylindenyl) zirconium dibromide, diethylsilyl-(methyl,butylindenyl) zirconium dibromide, diethylsilyl-(propylindenyl) zirconium dibromide, diethylsilyl-(butylindenyl) zirconium dibromide, diethylsilyl-(isobutylindenyl) zirconium dibromide, diethylsilyl-(phenylindenyl) zirconium dibromide, diethylsilyl-bis(cyclopentadienyl) zirconium diiodide, diethylsilyl-bis(methylcyclopentadienyl) zirconium diiodide, diethylsilyl-bis(dimethylcyclopentadienyl) zirconium diiodide, diethylsilyl-bis(trimethylcyclopentadienyl) zirconium diiodide, diethylsilyl-bis(tetramethylcyclopentadienyl) zirconium diiodide, diethylsilyl-bis(methyl,ethylcyclopentadienyl) zirconium diiodide, diethylsilyl-bis(diethylcyclopentadienyl) zirconium diiodide, diethylsilyl-bis(methyl,propylcyclopentadienyl) zirconium diiodide, diethylsilyl-bis(tetrahydroindenyl) zirconium diiodide, diethylsilyl-bis(indenyl) zirconium diiodide, diethylsilyl-(methylindenyl) zirconium diiodide, diethylsilyl-(ethylindenyl) zirconium diiodide, diethylsilyl-(methyl,ethylindenyl) zirconium diiodide, diethylsilyl-(methyl,propylindenyl) zirconium diiodide, diethylsilyl-(methyl,butylindenyl) zirconium diiodide, diethylsilyl-(propylindenyl) zirconium diiodide, diethylsilyl-(butylindenyl) zirconium diiodide, diethylsilyl-(isobutylindenyl) zirconium diiodide, diethylsilyl-(phenylindenyl) zirconium diiodide, ethylene-bis(cyclopentadienyl) zirconium dichloride, ethylene-bis(methylcyclopentadienyl) zirconium dichloride, ethylene-bis(dimethylcyclopentadienyl) zirconium dichloride, ethylene-bis(trimethylcyclopentadienyl) zirconium dichloride, ethylene-bis(tetramethylcyclopentadienyl) zirconium dichloride, ethylene-bis(methyl,ethylcyclopentadienyl) zirconium dichloride, ethylene-bis(diethylcyclopentadienyl) zirconium dichloride, ethylene-bis(methyl,propylcyclopentadienyl) zirconium dichloride, ethylene-bis(tetrahydroindenyl) zirconium dichloride, ethylene-bis(indenyl) zirconium dichloride, ethylene-(methylindenyl) zirconium dichloride, ethylene-(ethylindenyl) zirconium dichloride, ethylene-(methyl,ethylindenyl) zirconium dichloride, ethylene-(methyl,propylindenyl) zirconium dichloride, ethylene-(methyl,butylindenyl) zirconium dichloride, ethylene-(propylindenyl) zirconium dichloride, ethylene-(butylindenyl) zirconium dichloride, ethylene-(isobutylindenyl) zirconium dichloride, ethylene-(phenylindenyl) zirconium dichloride, ethylene-bis(cyclopentadienyl) zirconium difluoride, ethylene-bis(methylcyclopentadienyl) zirconium difluoride, ethylene-bis(dimethylcyclopentadienyl) zirconium difluoride, ethylene-bis(trimethylcyclopentadienyl) zirconium difluoride, ethylene-bis(tetramethylcyclopentadienyl) zirconium difluoride, ethylene-bis(methyl,ethylcyclopentadienyl) zirconium difluoride, ethylene-bis(diethylcyclopentadienyl) zirconium difluoride, ethylene-bis(methyl,propylcyclopentadienyl) zirconium difluoride, ethylene-bis(tetrahydroindenyl) zirconium difluoride, ethylene-bis(indenyl) zirconium difluoride, ethylene-(methylindenyl) zirconium difluoride, ethylene-(ethylindenyl) zirconium difluoride, ethylene-(methyl,ethylindenyl) zirconium difluoride, ethylene-(methyl,propylindenyl) zirconium difluoride, ethylene-(methyl,butylindenyl) zirconium difluoride, ethylene-(propylindenyl) zirconium difluoride, ethylene-(butylindenyl) zirconium difluoride, ethylene-(isobutylindenyl) zirconium difluoride, ethylene-(phenylindenyl) zirconium difluoride, ethylene-bis(cyclopentadienyl) zirconium dibromide, ethylene-bis(methylcyclopentadienyl) zirconium dibromide, ethylene-bis(dimethylcyclopentadienyl) zirconium dibromide, ethylene-bis(trimethylcyclopentadienyl) zirconium dibromide, ethylene-bis(tetramethylcyclopentadienyl) zirconium dibromide, ethylene-bis(methyl,ethylcyclopentadienyl) zirconium dibromide, ethylene-bis(diethylcyclopentadienyl) zirconium dibromide, ethylene-bis(methyl,propylcyclopentadienyl) zirconium dibromide, ethylene-bis(tetrahydroindenyl) zirconium dibromide, ethylene-bis(indenyl) zirconium dibromide, ethylene-(methylindenyl) zirconium dibromide, ethylene-(ethylindenyl) zirconium dibromide, ethylene-(methyl,ethylindenyl) zirconium dibromide, ethylene-(methyl,propylindenyl) zirconium dibromide, ethylene-(methyl,butylindenyl) zirconium dibromide, ethylene-(propylindenyl) zirconium dibromide, ethylene-(butylindenyl) zirconium dibromide, ethylene-(isobutylindenyl) zirconium dibromide, ethylene-(phenylindenyl) zirconium dibromide, ethylene-bis(cyclopentadienyl) zirconium diiodide, ethylene-bis(methylcyclopentadienyl) zirconium diiodide, ethylene-bis(dimethylcyclopentadienyl) zirconium diiodide, ethylene-bis(trimethylcyclopentadienyl) zirconium diiodide, ethylene-bis(tetramethylcyclopentadienyl) zirconium diiodide, ethylene-bis(methyl,ethylcyclopentadienyl) zirconium diiodide, ethylene-bis(diethylcyclopentadienyl) zirconium diiodide, ethylene-bis(methyl,propylcyclopentadienyl) zirconium diiodide, ethylene-bis(tetrahydroindenyl) zirconium diiodide, ethylene-bis(indenyl) zirconium diiodide, ethylene-(methylindenyl) zirconium diiodide, ethylene-(ethylindenyl) zirconium diiodide, ethylene-(methyl,ethylindenyl) zirconium diiodide, ethylene-(methyl,propylindenyl) zirconium diiodide, ethylene-(methyl,butylindenyl) zirconium diiodide, ethylene-(propylindenyl) zirconium diiodide, ethylene-(butylindenyl) zirconium diiodide, ethylene-(isobutylindenyl) zirconium diiodide, and ethylene-(phenylindenyl) zirconium diiodide.

In addition, the hafnium-based organometallic compound may satisfy Formula 2 below.

[Formula 2]

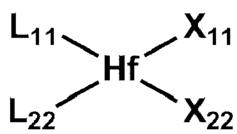

In Formula 2,

$L_{11}$ and $L_{22}$ are each independently cyclopentadienyl, indenyl, tetrahydroindenyl, or fluorodenyl;
$X_{11}$ and $X_{22}$ are each independently a halogen element or a hydrocarbon group having 1 to 10 carbon atoms;
$L_{11}$ and $L_{22}$ are each independently further substituted or unsubstituted with hydrogen, halogen, $C_1$-$C_{20}$ hydrocarbyl, $C_1$-$C_{20}$ alkoxy, or any combination thereof; and adjacent substituents are each independently linked to $L_{11}$ and $L_{22}$ to form a fused ring structure.

Specifically, for example, the hafnium-based organometallic compound may be any one or a combination of two or more selected from the group consisting of bis(normal-propylcyclopentadienyl) hafnium difluoride, bis(normal-butylcyclopentadienyl) hafnium difluoride, bis(iso-butylcyclopentadienyl) hafnium difluoride, bis(isopropylcyclopentadienyl) hafnium difluoride, bis(normal-propylcyclopentadienyl) hafnium dichloride, bis(normal-butylcyclopentadienyl) hafnium dichloride, bis(isobutylcyclopentadienyl) hafnium dichloride, bis(isopropylcyclopentadienyl) hafnium dichloride, bis(normal-propylcyclopentadienyl) hafnium dibromide, bis(isobutylcyclopentadienyl) hafnium dibromide, bis(normal-butylcyclopentadienyl) hafnium dibromide, bis(isopropylcyclopentadienyl) hafnium dibromide, bis(normal-propylcyclopentadienyl) hafnium diiodide, bis(normal-butylcyclopentadienyl) hafnium diiodide, bis(isobutylcyclopentadienyl) hafnium diiodide, and bis(isopropylcyclopentadienyl) hafnium diiodide.

By using the supported metallocene catalyst composition in which the zirconium-based organometallic compound satisfying Formula 1 and the hafnium-based organometallic compound satisfying Formula 2 are supported in an appropriate ratio, the polyolefin resin having the most desirable level of long chain branching can be obtained. When only an organometallic compound having the structure of Formula 2 is used as the catalyst, long chain branches may not be formed in the polymer. On the other hand, when only an organometallic compound having the structure of Formula 1 is used as the catalyst, the content of long chain branches is excessive, resulting in poor toughness.

As a preferred example, the polyolefin resin may have a long chain branch number per 1,000,000 carbons

(LCB/$10^6$ carbons) of 0.1 to 4.4 when measured under a condition of 0.01 rad/s shear viscosity, more preferably 0.2 to 4.3, and still more preferably 0.3 to 4.2. When the content of the long chain branches is within the ranges, excellent bubble stability can be secured.

On the other hand, in one example of the present disclosure, the aluminoxane-based compound serves as an activator or cocatalyst. Any aluminoxane compound, for example, existing methylaluminoxane (MAO) known to be suitable for olefin polymerization, modified methylaluminoxane (MMAO), and any commercially available aluminoxanes can be used. Preferably, the aluminoxane-based compound may be one or more selected from the group consisting of compounds represented by Formulas 3 to 5 below.

[Formula 3]

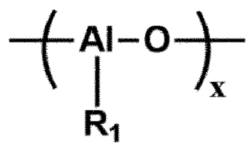

[Formula 4]

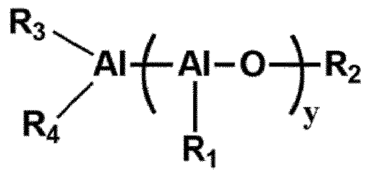

[Formula 5]

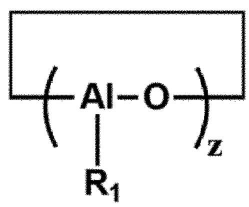

In Formulas 3 to 5,

$R_1$ to $R_4$ are each independently a linear or branched alkyl group having 1 to 10 carbon atoms, x and y are each independently an integer in a range of 1 to 50, and z is an integer in a range of 3 to 50.

In Formulas 3 to 5, it is preferable that most of $R_1$ to $R_4$, for example, 30 to 100 mol% of $R_1$ to $R_4$ are methyl groups, more preferably all of $R_1$ to $R_4$ are methyl groups. In addition, preferably, x, y, and z may be each independently an integer in a range of 4 to 30.

Specifically, for example, commercially available alkylaluminoxanes may be used as the aluminoxane-based compound. Non-limitedly, the alkylaluminoxane may be one or a combination of two or more selected from the group consisting of methylaluminoxane, ethylaluminoxane, butylaluminoxane, isobutylaluminoxane, hexylaluminoxane, octylaluminoxane, and decylaluminoxane. In addition, the aluminoxane-based compounds are commercially available in the form of various types of hydrocarbon solutions. Among them, it is preferable to use an aromatic hydrocarbon solution aluminoxane, and it is more preferable to use an aluminoxane solution dissolved in toluene.

In one example of the present disclosure, porous particles having a stable structure, such as inorganic oxides or inorganic salts, may be used as the carrier without particular limitations. Practically useful carriers are inorganic oxides of elements belonging to Groups 2, 3, 4, 5, 13 or 14 of the periodic table. Preferably, as the carrier, at least one selected from the group consisting of silica, alumina, silica-alumina, clay, and modified clay may be used. It is more preferable to use silica in the form of spherical particles.

In this case, water or hydroxy groups must be removed from the inorganic oxide carrier before use, which can be performed through heat treatment. The heat treatment of the carrier is carried out by heating at a temperature of 150°C to 800°C while fluidizing the carrier in a vacuum or nitrogen atmosphere. The carrier is used in the form of a dry powder in which the particles have an average particle size of about 1 to 250 μm and preferably 10 to 150 μm and a surface area of about 5 to 1200 $m^2$/g and preferably about 50 to 500 $m^2$/g. The pore volume of the carrier is 0.1 to 5

$cm^3$ /g and preferably 0.1 to 3.5 $cm^3$/g, and the pore size is about 5 to 50 nm and preferably 7.5 to 35 nm. It is preferable that the surface of the carrier per 1 g of silica has about 0 to 3 mmol of hydroxy groups and more preferably 0.5 to 2.5 mmol of hydroxy groups, and the amount of such hydroxy groups on the surface of the carrier depends on the dehydration or calcination temperature of the carrier.

On the other hand, the polyolefin resin according to an example of the present disclosure may have a density (D) of 0.910 to 0.940 g/$cm^3$ as measured by a density gradient column method according to ASTM D1505, a melt flow index (MIE) of 0.1 to 5.0 g/10 min as measured according to ASTM D1238 (190°C, 2.16 kg), a high-load melt flow index (MIE) of 17 to 100 g/10 min as measured according to ASTM D1238 (190°C, 21.6 kg), and a melt flow index ratio (SR = MIF/MIE) of 35 to 55. In addition, the ratio (Mw/Mn) of the weight average molecular weight (Mw) and the number average molecular weight (Mn) measured by gel permeation chromatography may be in a range of 2.0 to 10.0, and more preferably a range of 2.5 to 5.0. The ratio (Mz/Mw) of the Z-average molecular weight (Mz) and the weight average molecular weight (Mw) measured by gel permeation chromatography may be in a range of 1.0 to 5.0 and more preferably a range of 2.0 to 3.5.

More preferably, the polyolefin resin according to an example of the present disclosure may have a density (D) of 0.910 to 0.930 g/$cm^3$ as measured by a density gradient column method according to ASTM D1505, a melt flow index (MIE) of 0.2 to 3.0 g/10 min as measured according to ASTM D1238 (190°C, 2.16 kg), a high-load melt flow index (MIF) of 17 to 50 g/10 min as measured according to ASTM D1238 (190°C, 21.6 kg), and a melt flow index ratio (SR = MIF/MIE) of 35 to 50.

By satisfying the above physical properties, the polyolefin resin has good mechanical properties such as processability and toughness and thus can be applied to shrinkage films, agricultural films, and the like.

In addition, the polyolefin resin according to an example of the present disclosure may have a comonomer orthogonal index (COI) value of 2 to 10 as calculated by Expression 2 below.

[Expression 2]

$$COI = (\text{number of SCBs in Mz} - \text{number of SCBs in Mn}) / (\log Mz - \log Mn)$$

In Expression 2 above,
The number of SCBs in Mz is the average number of side branches derived from comonomers per 1,000 carbon atoms in Z-average molecular weight (Mz), and the number of SCBs in Mn is the number of side branches derived from comonomers per 1000 carbon atoms in umber-average molecular weight (Mn), and log Mz and log Mn are the log values of Mz or Mn, respectively.

The COI is a measure showing how the content of a comonomer such as alpha olefin is distributed according to molecular weight, and the average number of side branches is the sum of the number of short chain branches (SCB) having 1 to 6 carbon atoms and the number of long chain branches (LCB) having 7 or more carbon atoms.

When the COI value is positive, it means a polymer structure with a relatively high comonomer content in the high molecular weight region compared to the low molecular weight region, and conversely, when the COI value is negative, it means a polymer structure with a relatively high comonomer content in the low molecular weight region. In the case of the polyolefin according to the present disclosure, the COI value calculated by the method described above is in the range of about 2 to 10. When the COI value is less than 2.0, the mechanical properties of the polymer may be poor. On the other hand, when the COI value exceeds 10, the mechanical properties of the polymer may be excellent but the miscibility between constituent components is low, resulting in an increase in haze during film production, formation of a fisheye, and deterioration of the quality of molded products. That is, the polyolefin resin according to the present disclosure has a relatively small amount of comonomer in the low molecular weight region and a relatively large amount of comonomer in the high molecular weight region. Due to this characteristic, the polyolefin resin has excellent toughness.

Meanwhile, the polyolefin resin according to an example of the present disclosure may be a homopolymer obtained by polymerizing only ethylene, which is an olefin-based monomer, or a copolymer obtained by copolymerizing ethylene and alpha-olefin. In this case, as the alpha olefin monomer, which is a comonomer, an alpha olefin having 3 or more carbon atoms may be used. The alpha olefin having 3 or more carbon atoms may be at least one selected from the group consisting of propylene, 1-butene, 1-pentene, 4-methyl-1-pentene, 1-hexene, 1-heptene, 1-octene, 1-decene, 1-undecene, 1-dodecene, 1-tetradecene, 1-hexadecene, 1-octadecene, and 1-eicosene. Preferably, using an alpha olefin having 3 to 8 carbon atoms as the comonomer is preferable in terms of preparation of a polyolefin resin satisfying the above physical properties.

Another aspect of the present disclosure relates to a method of preparing a polyolefin resin, the method including: a) synthesizing a prepolymer by prepolymerizing a prepolymerization composition including an ethylene monomer, an

alpha olefin monomer having 3 or more carbon atoms, and a supported metallocene catalyst composition in a slurry polymerization reactor; and supplying a main polymerization composition including the prepolymer, an ethylene monomer, and an alpha olefin monomer having 3 or more carbon atoms to a gas phase reactor and polymerizing the main polymerization composition into a polyolefin resin, in which the supported metallocene catalyst composition is a catalyst in which a zirconium-based organometallic compound, a hafnium-based organometallic compound, and an aluminoxane-based compound are supported on a carrier.

As described above, since the polyolefin resin is prepared by first synthesizing the prepolymer in the slurry polymerization reactor and then performing main polymerization in the gas phase reactor, a relatively high-density low-molecular weight portion and a relatively low-density high-molecular weight portion are formed in respective stages. Therefore, the molecular weight distribution (Mw/Mn) of the resin is as broad as 3 or more, and a large number of long chain branches are included in the resin. Therefore, the resin has excellent processability. In addition, since the polyolefin resin is prepared using a heterogeneous catalyst in which a zirconium-based organometallic compound and a hafnium-based organometallic compound are supported in an appropriate ratio, the obtained polyolefin resin has improved bubble stability.

First, step a) of synthesizing a prepolymer by prepolymerizing a prepolymerization composition including an ethylene monomer, an alpha olefin monomer having 3 or more carbon atoms, and a supported metallocene catalyst composition is performed in a slurry polymerization reactor.

In one example of the present disclosure, the prepolymer composition includes 80 to 99.9 wt% of ethylene monomer and 0.1 to 20 wt% of alpha olefin monomer having 3 or more carbon atoms, based on the total amount of monomers. Preferably, the prepolymer composition includes 82 to 99.5 wt% of ethylene monomer and 0.5 to 18 wt% of alpha olefin monomer having 3 or more carbon atoms. More preferably, the prepolymer composition includes 85 to 97 wt% of ethylene monomer and 3 to 18 wt% of alpha olefin monomer having 3 or more carbon atoms. The alpha olefin having 3 or more carbon atoms may be at least one selected from the group consisting of propylene, 1-butene, 1-pentene, 4-methyl-1-pentene, 1-hexene, 1-heptene, 1-octene, 1-decene, 1-undecene, 1-dodecene, 1-tetradecene, 1-hexadecene, 1-octadecene, and 1-eicosene. Preferably, using an alpha olefin having 3 to 8 carbon atoms as a comonomer is preferable in terms of preparation of a polyolefin resin satisfying the above physical properties.

The supported metallocene catalyst composition according to an example of the present disclosure is as described above, and redundant description will be omitted.

In the supported metallocene catalyst composition according to the present disclosure, aluminum as the aluminoxane-based compound is used in an amount of 1 to 100,000 moles per 1 mole of the zirconium-based organometallic compound and the hafnium-based organometallic compound, preferably an amount of 1 to 5,000 moles, and more preferably an amount of 1 to 2,500 moles. The amount of the carrier used may be appropriately adjusted according to the characteristics of the catalyst required. The supported amount of aluminum (Al) derived from aluminoxane in the supported metallocene catalyst composition is 5 to 30 wt%, and preferably 7 to 20 wt%. The supported amount of zirconium derived from the zirconium-based organometallic compound may be 0.01 to 2 wt%, and preferably 0.05 to 0.3 wt%. The supported amount of hafnium derived from the hafnium-based organometallic compound may be 0.01 to 2 wt% and preferably 0.10 to 1.03 wt%.

In addition, the supported metallocene catalyst composition may be added in an amount of 0.01 to 0.005 parts by weight and more preferably 0.02 to 0.05 parts by weight, based on 100 parts by weight of the total monomers (ethylene + alpha olefin).

On the other hand, step a) may be performed in a slurry polymerization reactor, and in this case, a solvent or olefin itself may be used as a medium. The solvent is any one solvent selected from the group consisting of propane, butane, isobutane, pentane, hexane, octane, decane, dodecane, cyclopentane, methylcyclopentane, cyclohexane, benzene, toluene, xylene, dichloromethane, chloroethane, 1,2-dichloroethane, and chlorobenzene. Alternatively, the solvent is a mixed solvent composed of two or more solvents selected from the group.

The molecular weight and molecular weight distribution of the polymer as the end product prepared according to the present disclosure can be controlled by changing the polymerization temperature or changing the hydrogen concentration in the reactor.

In the polymerization or copolymerization of olefins according to the present disclosure, the polymerization temperature is not particularly limited because it can vary depending on the reactants, reaction conditions, etc., but, for example, the polymerization temperature in step a) is in a range of 0°C to 120°C and preferably a range of 20°C to 80°C. In addition, the polymerization pressure is in a range of from atmospheric pressure to 500 kgf/cm$^2$, preferably a range of from atmospheric pressure to 60 kgf/cm$^2$, and more preferably a range of from 10 to 60 kgf/cm$^2$. The polymerization may be carried out in a batch, semi-continuous, or continuous manner. The polymerization may also be carried out in two or more stages with different reaction conditions.

In the polymerization or copolymerization of olefins according to the present disclosure, the concentration of hydrogen supplied to the slurry polymerization reactor may vary depending on the target molecular weight and molecular weight distribution of the polyolefin. As a non-limiting example, per 100 parts of total monomers (ethylene + alpha olefin),

the hydrogen may be added in an amount of 0.001 to 0.1 parts by weight, more preferably 0.001 to 0.05 parts by weight, and still more preferably 0.001 to 0.01 parts by weight.

Next, step b) of supplying a main polymerization composition including the prepolymer, an ethylene monomer, and an alpha olefin monomer having 3 or more carbon atoms to a gas phase reactor, and polymerizing the main polymerization composition into a polyolefin resin may be performed.

The main polymerization composition may include the prepolymer, an ethylene monomer, and an alpha olefin monomer having 3 or more carbon atoms, and the supply amount of each component may vary depending on the physical properties of the alpha olefin polymer to be finally obtained. Specifically, the finally obtained polyolefin polymer may contain 1 to 5 wt% of units derived from the prepolymer, 80 to 99 wt% of units derived from the ethylene monomer, and 0 to 15 wt% of units derived from the alpha olefin monomer having 3 or more carbon atoms, based on the total amount of the polyolefin polymer. More preferably, the finally obtained polyolefin polymer may contain 2 to 5 wt% of units derived from the prepolymer, 83 to 97 wt% of units derived from the ethylene monomer, and 1 to 12 wt% of units derived from the alpha olefin monomer having 3 or more carbon atoms.

The molecular weight and molecular weight distribution of the polymer as the end product prepared according to the present disclosure can be controlled by changing the polymerization temperature or changing the hydrogen concentration in the reactor.

In the polymerization or copolymerization of olefins according to the present disclosure, the polymerization temperature is not particularly limited because it can vary depending on the reactants, reaction conditions, etc. For example, the polymerization temperature in step b) is in a range of 0°C to 120°C and preferably a range of 20°C to 110°C. In addition, the polymerization pressure is in a range of from atmospheric pressure to 500 kgf/cm$^2$, preferably a range of from atmospheric pressure to 60 kgf/cm$^2$, and more preferably a range of from 10 to 60 kgf/cm$^2$. The polymerization may be carried out in a batch, semi-continuous, or continuous manner. The polymerization may also be carried out in two or more stages with different reaction conditions.

Hereinafter, a polyolefin resin prepared using a heterogeneous catalyst and a method of preparing the same, according to the present disclosure, will be described in detail, with reference to examples. However, the examples described above are presented only for illustrative purposes and are not intended to limit the present disclosure. The examples can be embodied in other various forms.

In addition, unless otherwise defined, all technical and scientific terms have the same meaning as that is generally understood by the ordinarily skilled in the art to which the present disclosure pertains. The terminology used in the description herein is merely to effectively describe specific embodiments and examples and is not intended to limit the present disclosure. In addition, the unit of components to be added, which are not specifically described in the specification, may be % by weight (represented as wt%) .

**[Characterization method]**

(1) Melt flow index (MIE, MI2.16): measured at 190°Cand 2.16 kg according to ASTM D1238.

(2) High-load melt flow index (MIF, MI21.6): measured at 190°Cand 21.6 kg according to ASTM D1238.

(3) Melt flow index ratio (SR, MFRR) : Calculated by MIF/MIE (F/E) .

(4) Density: measured by the density gradient method according to ASTM D1505.

(5) Molecular weight and molecular weight distribution: Using a gel permeation chromatography-RI (GPC-RI; by Polymer Laboratory Inc. 220 System) equipped with a refractive index detector (RI detector), the measurement was performed as follows. Two Olexis and one Guard were used as separation columns, and the column temperature was maintained at 160 °C. Calibration was performed using a standard polystyrene set manufactured by Polymer Laboratory Inc. Trichlorobenzene containing 0.0125 wt% of antioxidant (BHT) was used as an eluent, the sample concentration was 1.0 mg/ml, and the measurement was performed for 27 minutes under conditions of an injection amount of 0.2 ml and a pump flow rate of 1.0 ml/min. The number average molecular weight (Mn), weight average molecular weight (Mw), and Z-average molecular weight (Mz) were measured using Easical A and Easical B (manufactured by Agilent), which are polystyrene standards, after the universal calibration, and calculated by conversion to polyethylene.

(6) Haze: measured by the ASTM D1003 method.

(7) Melt tension: measured as follows using Capirograph 1B manufactured by Toyoseiki. Using a capillary tube with a length of 10 mm and a diameter of 1.0 mm, a pellet sample of 5 to 10 g was measured at a temperature of 190°C, a speed of 10 mm/min, and a draw speed of 30 m/min. Each sample was measured three times to obtain an average value.

(8) Zero shear viscosity (n°): Anton Paar's mcr-702 equipment was used, and the measurement was performed under conditions of a method using a parallel plate, a diameter of 25 mm, a temperature of 190°C, a strain of 5%,

and a range of 0.1~100 rad/s.

(9) Long chain branch (LCB): Janzen-Colby Plot was used (Journal of molecular structure Vol. 485-486(1999) 569-584; The Journal of Physical Chemistry Vol. 84(1980) 649; Macromolecules Vol.43(2010) 8836-8852). The number of long chain branches was calculated using the value of molecular weight measured by gel permeation chromatography and the viscosity of 0.01 rad/s shear in the zero shear viscosity measurement process **(9).** Long-chain branches were expressed as the number of long chain branches per 1,000,000 carbons (LCB/$10^6$ carbons).

**[Preparation of catalyst composition]**

**Preparation Example 1.**

As shown in Table 1 below, racemic-dimethylsilyl bis(tetrahydroindenyl) zirconium dichloride (Lanxess AG) as organometallic compound 1, bis(n-propyl cyclopentadienyl) hafnium dichloride (MCN Co.) as organometallic compound 2, and methylaluminoxane (MAO, Albemarle Co., 10 and 20 wt% toluene solution) were added and stirred at room temperature in a 300-L reactor under a nitrogen atmosphere for 30 minutes to prepare a reaction solution. Next, silica ($SiO^2$, PD18048, PQ) calcined at 250°C was added to the reaction solution, ultrasonic waves were applied thereto for 4 hours, and the supernatant was then removed.

After washing the remaining solid particles twice with hexane, the particles were dried to prepare a free-flowing solid powder supported-catalyst composition.

**[Preparation Examples 2 and 3]**

Supported catalyst compositions were prepared in the same manner as in Preparation Example 1 as described in Table 1 below except for using calcined silica ($SiO_2$, ES-70X, PQ).

**[Preparation Example 4]**

A supported catalyst compositions was prepared in the same manner as in Preparation Example 1 as described in Table 1 below except that only organic metal compound 1, which is racemic-dimethylsilyl bis(tetrahydroindenyl) zirconium dichloride (Lanxess AG), was used.

**[Preparation Example 5]**

As shown in Table 1 below, to a 300-L reactor equipped with a nitrogen atmosphere stirrer, (pentamethylcyclopentadienyl)(indenyl) zirconium dichloride as organometallic compound 1, bis (n-propyl cyclopentadienyl) hafnium dichloride (MCN Co.) as organometallic compound 2, methylaluminoxane (MAO, Albemarle, 20% toluene solution), and 0.75 kg of 1,3,5-trimethyl-2,4,6-tris(3,5-di-ter-butyl-4-hydroxybenzyl)benzene (Ethanox330, Albemarle) were added, and the reactants were stirred. After stirring at room temperature for 1 hour, calcined silica ($SiO_2$, ES-70X, PQ Co.) was added, ultrasonic waves were applied at 250°C for 2 hours, and the supernatant was removed.

After washing the remaining solid particles twice with hexane, the particles were dried to prepare a free-flowing solid powder supported-catalyst composition.

[Table 1]

| Classification | Reaction solution | | | | | supported-catalyst (wt%) | | |
|---|---|---|---|---|---|---|---|---|
| | Organometallic compound 1 (Zr-based) | Organometallic compound 2 (Hf-based) | 20 wt% MAO | 10 wt% MAOs | Silica | Al | Hf | Zr |
| Preparation Example 1 | 247 g | 253 g | 58 kg | 27 kg | 21 kg | 14.1 | 0.18 | 0.11 |
| Preparation Example 2 | 270 g | 1510 g | 128 kg | 56 kg | 55 kg | 15.0 | 0.40 | 0.11 |

(continued)

| Classification | Reaction solution | | | | | supported-catalyst (wt%) | | |
|---|---|---|---|---|---|---|---|---|
| | Organometallic compound 1 (Zr-based) | Organometallic compound 2 (Hf-based) | 20 wt% MAO | 10 wt% MAOs | Silica | Al | Hf | Zr |
| Preparation Example 3 | 983 g | 477 g | 128 kg | 56 kg | 55 kg | 15.1 | 0.10 | 0.30 |
| Preparation Example 4 | 633 g | - | 58 kg | 27 kg | 21 kg | 14.8 | - | 0.28 |
| Preparation Example 5 | 50 g | 274.4 g | 46 kg | - | 15 kg | 15.4 | 0.40 | 0.04 |

**[Production and characterization of linear low density polyethylene copolymer (LLDPE)]**

**[Example 1]**

Polymerization was performed using the supported catalyst composition prepared in Preparation Example 1 in a continuous gas phase fluidized bed reactor in which one prepolymerization reactor of a slurry polymerization type and a gas phase reactor having a diameter of 60 cm were connected in series. The fluidized bed is composed of granular polymer particles. 1-hexene as a liquid phase and ethylene and hydrogen as gas phases were mixed together in a pipe and injected into a reactor recirculation gas line. The injected composition and physical properties of the resulting LLDPE resin are shown in Table 2 below. The concentrations of ethylene, hydrogen and 1-hexene in the gas phase reactor were adjusted to maintain the composition as shown in Table 2, and the hydrogen flow rate was adjusted to maintain a constant hydrogen-to-ethylene molar ratio. In addition, the prepolymer was supplied in an amount of about 2 to 5 wt% with respect to the total weight of the main polymerization composition (prepolymer + ethylene + 1-hexene). In Table 2, the balance corresponding to the remaining mol% other than the amounts of ethylene, hydrogen, and 1-hexene is propane serving as a diluent. The concentrations of all the gases in a recirculation gas stream were determined by on-line gas chromatography. In the prepolymerization reactor and the gas phase reactor, propane was used as a diluent. The copolymer of ethylene and 1-hexene produced by the catalytic reaction was continuously discharged so that the height of the fluidized bed of the gas phase reactor was maintained constant. In order to maintain the operating temperature not to fluctuate, the heat generated by the polymerization reaction was used to adjust the temperature of the circulating gas using a heat exchanger.

**[Comparative Example 1]**

LLDPE was prepared in the same manner as in Example 1 according to Table 2 below, except that the supported catalyst composition prepared in Preparation Example 4 was used.

**[Comparative Example 2]**

LLDPE was prepared in the same manner as in Example 1 according to Table 2 below, except that the catalyst composition prepared in Preparation Example 5 was used.

[Table 2]

| Classification | | Example 1 | Comparative Example 1 | Comparative Example 2 |
|---|---|---|---|---|
| Prepolyme rization Reactor | Catalyst injection amount (g/h) | 16 | 15 | 19.7 |
| | Reactor temperature (°C) | 46 | 46 | 46 |
| | Reactor pressure (K/G) | 20.3 | 20.3 | 22.5 |
| | Ethylene injection amount (kg/h) | 3 | 3 | 3 |
| | Hydrogen injection amount (g/h) | 0.07 | 0.22 | 0.11 |
| | 1-Hexene injection amount (kg/h) | 0.43 | 0.38 | 0.40 |
| | MIE (g/10 min) | 1.1 | 0.8 | 0.9 |
| | SR(F/E) | 53 | 44.3 | 20 |
| | Density (D) (g/cm$^3$) | 0.9295 | 0.9319 | 0.9341 |
| Gas phase Reactor | Reactor temperature (°C) | 75 | 77 | 75 |
| | Reactor pressure (K/G) | 20 | 20 | 22.1 |
| | Ethylene concentration (mol$) | 11.9 | 28 | 11.6 |
| | 1-Hexene concentration (mol%) | 0.01 | 0.008 | 0.177 |
| | Hydrogen concentration (ppm) | 125 | 184 | 76.4 |
| | MIE (g/10 min) | 0.48 | 0.55 | 0.83 |
| | SR(F/E) | 46 | 44 | 26 |
| | Density (D) (g/cm$^3$) | 0.9159 | 0.9165 | 0.9182 |
| | Mw (g/mol) | 122,997 | 108,363 | 118,516 |
| | Mw/Mn | 3.47 | 3.46 | 4.70 |
| | Mz/Mw | 2.54 | 2.30 | 2.67 |

**[Preparation Examples 2 and 3]**

Polymerization was performed using the supported catalyst composition prepared in Preparation Example 2 in a continuous gas phase fluidized bed reactor in which two prepolymerization reactors of a slurry polymerization type and one gas phase reactor were connected in series. The fluidized bed is composed of granular polymer particles. 1-Hexene as a liquid phase and ethylene and hydrogen as gas phases were mixed together in a pipe and injected into a reactor recirculation gas line. The injected composition and physical properties of the resulting LLDPE resin are shown in Table 3 below. The concentrations of ethylene, hydrogen and 1-hexene in the gas phase reactor were adjusted to maintain the composition as shown in Table 3, and the hydrogen flow rate was adjusted to maintain a constant hydrogen-to-ethylene molar ratio. In addition, the prepolymer was supplied in an amount of about 2 to 5 wt% with respect to the total weight of the main polymerization composition (prepolymer + ethylene + 1-hexene). In Table 3, the balance corresponding to the remaining mol% other than the amounts of ethylene, hydrogen, and 1-hexene is propane serving as a diluent. The concentrations of all the gases in a recirculation gas stream were determined by on-line gas chromatography. In the prepolymerization reactor and the gas phase reactor, propane was used as a diluent. The copolymer of ethylene and 1-hexene produced by the catalytic reaction was continuously discharged so that the height of the fluidized bed of the gas phase reactor was maintained constant. In order to maintain the operating temperature not to fluctuate, the heat generated by the polymerization reaction was used to adjust the temperature of the circulating gas using a heat exchanger.

**[Comparative Examples 3 and 4]**

LLDPE was prepared in the same manner as in Examples 2 and 3 according to Table 3 below, except that the supported catalyst composition prepared in Preparation Example 3 was used.

[Table 3]

| Classification | | Example 2 | Example 3 | Comparative Example 3 | Comparative Example 4 |
|---|---|---|---|---|---|
| Prepoly merizat ion Reactor 1 | Catalyst injection amount (kg/h) | 6.4 | 6.4 | 6.5 | 7 |
| | Reactor temperature (°C) | 46.6 | 46.6 | 42.1 | 47 |
| | Reactor pressure (K/G) | 26.4 | 26.4 | 25.5 | 25.6 |
| | Ethylene injection amount (kg/h) | 94.9 | 94.9 | 57.2 | 86 |
| | Hydrogen injection amount (g/h) | 4.0 | 4.0 | 5.0 | 5.5 |
| | 1-Hexene injection amount (kg/h) | 12.5 | 12.5 | 13.4 | 13 |
| Prepoly merizat ion Reactor 2 | Reactor temperature (°C) | 46.6 | 46.6 | 46.8 | 46.6 |
| | Reactor pressure (K/G) | 25.4 | 25.4 | 25.1 | 25.1 |
| | Ethylene injection amount (kg/h) | 1,086 | 1,080 | 760 | 1,049 |
| | Hydrogen injection amount (g/h) | 70 | 70 | 80 | 70 |
| | 1-Hexene injection amount (kg/h) | 64 | 62 | 48 | 64 |
| | MIE (g/10 min) | 2.86 | 2.47 | 1.0 | 0.78 |
| | SR(F/E) | 24.9 | 24.6 | 57 | 56.4 |

(continued)

| | | | | | |
|---|---|---|---|---|---|
| | Density (D) (g/cm$^3$) | 0.9357 | 0.9360 | 0.9330 | 0.9375 |
| Gas phase Reactor | Reactor temperature (°C) | 72 | 72 | 76 | 73 |
| | Reactor pressure (K/G) | 20.4 | 20.6 | 21.5 | 20 |
| | Ethylene concentration (mol%) | 14.0 | 13.3 | 12.5 | 13.3 |
| | 1-Hexene concentration (mol%) | 0.16 | 0.17 | 0.13 | 0.12 |
| | Hydrogen concentration (ppm) | 126 | 153 | 174 | 180 |
| | MIE (g/10 min) | 0.59 | 0.84 | 0.52 | 0.51 |
| | SR(F/E) | 39.0 | 36.7 | 53.1 | 50 |
| | Density (D) (g/cm$^3$) | 0.9155 | 0.9151 | 0.9160 | 0.9178 |
| | Mw (g/mol) | 124,211 | 126,244 | 110,598 | 117,546 |
| | Mw/Mn | 3.37 | 3.61 | 2.83 | 3.03 |
| | Mz/Mw | 2.68 | 2.65 | 2.02 | 2.26 |

**[Comparative Examples 5 to 7]**

In Comparative Examples 5 to 7, copolymers were prepared in the UNIPOL process used by Exxon Mobile Corporation, using a single gas phase reactor without using a slurry reactor. In Comparative Example 6, a copolymer was prepared using a prepolymerization reactor process and a gas phase reactor process. Table 4 below shows the physical properties of ethylene/hexene copolymers (trade names: Enable2010, XP9200EN, XP6056ML) of Comparative Examples 5 to 7).

[Table 4]

| Classification | Comparative Example 5 | Comparative Example 6 | Comparative Example 7 |
|---|---|---|---|
| MIE (g/10 min) | 1.0 | 1.0 | 0.5 |
| SR(F/E) | 38 | 16.8 | 37.7 |
| Density (D) (g/cm$^3$) | 0.92 | 0.919 | 0.916 |
| Mw (g/mol) | 97,751 | 111,714 | 108,330 |
| Mw/Mn | 2.95 | 2.58 | 2.93 |
| Mz/Mw | 2.12 | 1.95 | 2.14 |

**[Preparation of Pellet]**

To evaluate the performance of blown films of Examples 1 to 3 and Comparative Examples 1 to 7, 500 ppmw of a primary antioxidant (product name: 1010, Songwon Industry), 1,000 ppmw of a secondary antioxidant (product name: 168, Songwon Industry), and 500 ppmw of a polymer processing aid (PPA; product name: PA450, Hannanotek) were added, and the material mixture was put it into a Twin-Screw Extruder® (type: 814 30 2, model name: 911436) and processed at a temperature of 200°C at a screw rotation speed of 60 rpm to prepare a melt blend. The melt blend was pelletized using a pelletizer.

**[Production of LLDPE blown film]**

**[Production of single blown film]**

For the production of a single film, the polyolefin copolymer pellets of Examples 1 to 3 and Comparative Examples 1 to 7 were put into a blown film extruder (Model Name: LLD Blown Film M/C 40, manufacturer: Duk young Tech) and processed under processing conditions of a temperature of 180°C, a screw diameter of 40 mm, a screw rotation speed of 90 rpm, a blow-up ratio (BUR) of 2.5/39.3 cm, and a die lip diameter of 100 mm. Thus, films with a thickness of 30 μm were obtained.

[Table 5]

| Classification | Example 1 | Comparative Example 1 | Comparative Example 2 |
|---|---|---|---|
| Resin melting pressure (Bar) | 184 | 170 | 295 |
| COI | 2.54 | 0.45 | 6.2 |
| Tear strength (MD/TD) (g) | 70/345 | 188/493 | 280/430 |
| Haze (%) | 12 | 8.2 | 13.5 |
| n° (mPa-s) | $1.85 \times 10^{13}$ | $9.57 \times 10^{9}$ | $1.3 \times 10^{7}$ |
| Long chain branch (LCB/$10^6$ carbon) | 4.03 | 5.86 | 0 |
| STI (@0.1/100 rad/s) | 19.8 | 15.2 | 6.85 |
| Melt tension (gf) | 4.12 | 3.37 | 1.4 |
| Expression (1) | 3.93 | 3.77 | 3.28 |

[Table 6]

| Classification | Example | | Comparative Example | | | | |
|---|---|---|---|---|---|---|---|
| | 2 | 3 | 3 | 4 | 5 | 6 | 7 |
| Resin melting pressure (Bar) | 283 | 261 | 255 | 263 | 235 | 294 | 290 |
| COI | 3.2 | 7.3 | 0.3 | -0.68 | 0.05 | 0.69 | -0.11 |
| Tear strength (MD/TD) (g) | 75/300 | 95/350 | 80/500 | 70/420 | 130/550 | 287/425 | 80/420 |
| Haze (%) | 14.1 | 13.8 | 9.9 | 11.6 | 9.1 | 8.3 | 11.6 |
| n° (mPa-s) | $3.02 \times 10^{9}$ | $1.75 \times 10^{8}$ | $2.32 \times 10^{8}$ | $5.37 \times 10^{10}$ | $2.49 \times 10^{8}$ | $6.91 \times 10^{6}$ | $1.48 \times 10^{10}$ |
| Long chain branch (LCB/$10^6$ carbon) | 1.5 | 0.4 | 7.6 | 4.5 | 4.8 | 0 | 6.1 |
| STI (@0.1/100 rad/s) | 12.3 | 10.9 | 16.4 | 17.2 | 9.0 | 2.7 | 13.0 |
| Melt tension (gf) | 4.3 | 4.4 | 3.3 | 3.2 | 2.7 | 1.6 | 3.5 |
| Expression (1) | 3.63 | 3.41 | 3.99 | 3.95 | 3.35 | 3.14 | 3.72 |

Referring to Tables 1 to 6, the polyolefin films of Examples 1 to 3 have higher melt tension than the calculated value of Expression (1) and thus have excellent bubble stability, whereas the polyolefin films of Comparative Examples 1 to 7 have lower melt tension than the calculated value of Expression (1) and thus have poor bubble stability.

Since the polyolefin films were prepared using a heterogeneous catalyst in which a zirconium-based organometallic compound satisfying Formula 1 and a hafnium-based organometallic compound satisfying Formula 2 are supported in an appropriate ratio, the content of long chain branches in the polyolefin films was 0.1 to 4.4 per $10^6$ carbon atoms, and thus the polyolefin films had improved melt tension.

In addition, the polyolefin films of Examples 1 to 3 had COI values of 2 to 10. From this result, it was confirmed that the polyolefin resin according to the present disclosure had relatively little comonomer in the low molecular weight region and relatively low comonomer in the high molecular weight region. Thus, the polyolefin resins had excellent toughness.

The present disclosure has been described with reference to some specific examples and features. However, the specific examples and features are only for illustrative purposes and are not intended to limit the scope of the present disclosure, and it will be appreciated by those skilled in the art that various modifications and changes are possible on the basis of the description of the examples given above.

Therefore, the spirit of the present disclosure is not limited to the specific examples described above, and all forms defined by the appended claims and all equivalents and modifications thereto fall within the scope of the present disclosure.

## Claims

1. A polyolefin resin satisfying Expression 1 below,

[Expression 1]

$$MT > 0.01 \times (SR/MIE) + 2.97$$

wherein in Expression 1 above,
MT is a melt tension (gf) of the polyolefin resin, SR is the ratio of melt flow index of a polyolefin resin (SR = MIF/MIE), MIE is a melt flow index (g/10 min) measured according to ASTM D1238 (190°C, 2.16 kg), and MIF is a high-load melt flow index (g/10 min) measured according to ASTM D1238 (190°C, 21.6 kg).

2. The polyolefin resin of claim 1, wherein the polyolefin resin is prepared using a supported metallocene catalyst composition in which a zirconium-based organometallic compound, a hafnium-based organometallic compound, and an aluminoxane-based compound are supported on a carrier.

3. The polyolefin resin of claim 2, wherein the supported metallocene catalyst composition has a hafnium-to-zirconium weight ratio in a range of 1:0.1 to 1:1.2.

4. The polyolefin resin of claim 2, wherein the zirconium-based organometallic compound satisfies Formula 1 below,

[Formula 1]

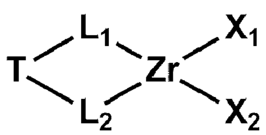

wherein in Formula 1,

$L_1$ and $L_2$ are each independently cyclopentadienyl, indenyl, tetrahydroindenyl, or fluordenyl;
T is Al, Si, Sn, or a hydrocarbon group having 1 to 4 carbon atoms;
$X_1$ and $X_2$ are each independently a halogen element or a hydrocarbon group having 1 to 10 carbon atoms;
$L_1$, $L_2$, and T are each independently further substituted or unsubstituted with hydrogen, halogen, $C_1$-$C_{20}$ hydrocarbyl, $C_1$-$C_{20}$ alkoxy, or any combination thereof, and
adjacent substituents are each independently linked to $L_1$ and $L_2$ to form a fused ring structure.

5. The polyolefin resin of claim 2, wherein the hafnium-based organometallic compound satisfies Formula 2 below,

[Formula 2]

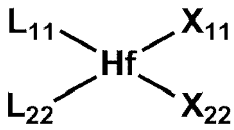

wherein in Formula 2,

$L_{11}$ and $L_{22}$ are each independently cyclopentadienyl, indenyl, tetrahydroindenyl, or fluordenyl;
$X_{11}$ and $X_{22}$ are each independently a halogen or a hydrocarbon group having 1 to 10 carbon atoms;
$L_{11}$ and $L_{22}$ are each independently further substituted or unsubstituted with hydrogen, halogen, $C_1$-$C_{20}$ hydrocarbyl, $C_1$-$C_{20}$ alkoxy, or any combination thereof, and
adjacent substituents are each independently linked to $L_{11}$ and $L_{22}$ to form a fused ring structure.

**6.** The polyolefin resin of claim 2, wherein the aluminoxane-based compound is at least one selected from the group consisting of compounds represented by Formulas 3 to 5,

[Formula 3]

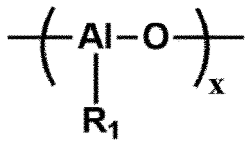

[Formula 4]

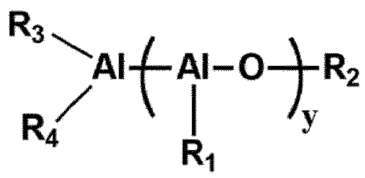

[Formula 5]

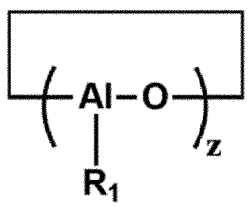

where in Formulas 3 to 5,
$R_1$ to $R_4$ are each independently a linear or branched alkyl group having 1 to 10 carbon atoms, x and y are each independently an integer in a range of 1 to 50, and z is an integer in a range of 3 to 50.

**7.** The polyolefin resin of claim 1, wherein in the polyolefin resin, the number of long chain branches per 1,000,000 carbon atoms (LCB/$10^6$ carbon atoms) measured under a condition of 0.01 rad/s shear viscosity is in a range of 0.1 to 4.4.

**8.** The polyolefin resin of claim 1, wherein the polyolefin resin has a density of 0.910 to 0.940 g/$cm^3$ measured according to ASTM D1505.

**9.** The polyolefin resin of claim 8, wherein the polyolefin resin has a melt flow index (MIE) of 0.1 to 5.0 g/10 min measured according to ASTM D1238 (190°C, 2.16 kg), a high-load melt flow index (MIE) of 17 to 100 g/10 min

measured according to ASTM D1238 (190°C, 21.6 kg).

**10.** The polyolefin resin of claim 9, wherein the polyolefin resin has a melt flow index ratio (SR = MIF/MIE) of 35 to 55.

**11.** The polyolefin resin of claim 10, wherein a ratio (Mw/Mn) of a weight average molecular weight (Mw) and a number average molecular weight (Mn) measured by gel permeation chromatography is in a range of 2.0 to 10.0, and a ratio (Mz/Mw) of a Z-average molecular weight (Mz) and the weight average molecular weight (Mw) measured by gel permeation chromatography is in a range of 1.0 to 5.0.

**12.** The polyolefin resin of claim 1, wherein the polyolefin resin has a comonomer orthogonal index (COI) value of 2 to 10 calculated by Expression 2 below,

[Expression 2]

$$COI = (\text{number of SCBs in Mz} - \text{number of SCBs in Mn}) / (\log Mz - \log Mn)$$

wherein in Expression 2 above,

the number of SCBs in Mz is an average number of side branches derived from comonomers per 1,000 carbon atoms in a Z-average molecular weight (Mz),
the number of SCBs in Mn is the number of side branches derived from comonomers per 1,000 carbon atoms in a number-average molecular weight (Mn), and
logMz and logMn are log values of Mz and Mn, respectively.

**13.** A method of preparing a polyolefin resin, the method comprising:

a) synthesizing a prepolymer by prepolymerizing a prepolymerization composition including an ethylene monomer, an alpha olefin monomer having 3 or more carbon atoms, and a supported metallocene catalyst composition in a slurry polymerization reactor; and
b) supplying a main polymerization composition including the prepolymer, an ethylene monomer, and an alpha olefin monomer having 3 or more carbon atoms to a gas phase reactor, and polymerizing the main polymerization composition into a polyolefin resin,

wherein the supported metallocene catalyst composition has a form in which a zirconium-based organometallic compound, a hafnium-based organometallic compound, and an aluminoxane-based compound are supported on a carrier.

**14.** The method of claim 13, wherein the supported metallocene catalyst composition has a hafnium-to-zirconium weight ratio in a range of 1:0.1 to 1:1.2.

**15.** The method of claim 13, wherein the zirconium-based organometallic compound satisfies Formula 1 below,

[Formula 1]

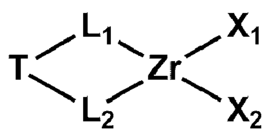

wherein in Formula 1,

$L_1$ and $L_2$ are each independently cyclopentadienyl, indenyl, tetrahydroindenyl, or fluordenyl;
T is Al, Si, Sn, or a hydrocarbon group having 1 to 4 carbon atoms;
$X_1$ and $X_2$ are each independently a halogen or a hydrocarbon group having 1 to 10 carbon atoms;
$L_1$, $L_2$, and T are each independently further substituted or unsubstituted with hydrogen, halogen, $C_1$-$C_{20}$ hy-

drocarbyl, $C_1$-$C_{20}$ alkoxy, or any combination thereof, and
adjacent substituents are each independently linked to $L_1$ and $L_2$ to form a fused ring structure.

**16.** The method of claim 13, wherein the hafnium-based organometallic compound satisfies Formula 2 below,

[Formula 2]

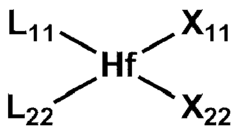

wherein in Formula 2,

$L_{11}$ and $L_{22}$ are each independently cyclopentadienyl, indenyl, tetrahydroindenyl, or fluordenyl;
$X_{11}$ and $X_{22}$ are each independently a halogen element or a hydrocarbon group having 1 to 10 carbon atoms;
$L_{11}$ and $L_{22}$ are each independently further substituted or unsubstituted with hydrogen, halogen, $C_1$-$C_{20}$ hydrocarbyl, $C_1$-$C_{20}$ alkoxy, or any combination thereof, and
adjacent substituents are each independently linked to $L_{11}$ and $L_{22}$ to form a fused ring structure.

**17.** The method of claim 13, wherein the aluminoxane-based compound is at least one selected from the group consisting of compounds represented by Formulas 3 to 5 below,

[Formula 3]

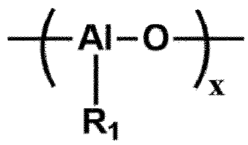

[Formula 4]

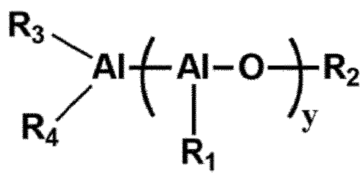

[Formula 5]

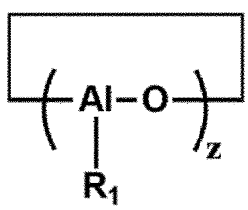

wherein in Formulas 3 to 5,
$R_1$ to $R_4$ are each independently a linear or branched alkyl group having 1 to 10 carbon atoms, x and y are each independently an integer in a range of 1 to 50, and z is an integer in a range of 3 to 50.

**18.** The method of claim 13, wherein the polyolefin resin satisfies Expression 1 below,

[Expression 1]

$$MT > 0.01 \times (SR/MIE) + 2.97$$

wherein in Expression 1 above,
MT is a melt tension(gf) of the polyolefin resin, SR is ae melt flow index ratio of the polyolefin resin (SR = MIF/MIE), MIE is a melt flow index (g/10 min) measured according to ASTM D1238 (190°C, 2 kg), and MIF is a high-load melt flow index (g/10 min) measured according to ASTM D1238 (190°C, 21.6 kg).

**19.** The method of claim 13, wherein in the polyolefin resin, the number of long chain branches per 1,000,000 carbon atoms (LCB/$10^6$ carbon atoms) measured under a condition of 0.01 rad/s shear viscosity is in a range of 0.1 to 4.4.

**20.** The method of claim 13, wherein the prepolymer composition comprises 80 to 99.9 wt% of the ethylene monomer and 0.1 to 20 wt% of the alpha olefin monomer having 3 or more carbon atoms, based on the total amount of monomers.

FIG.1

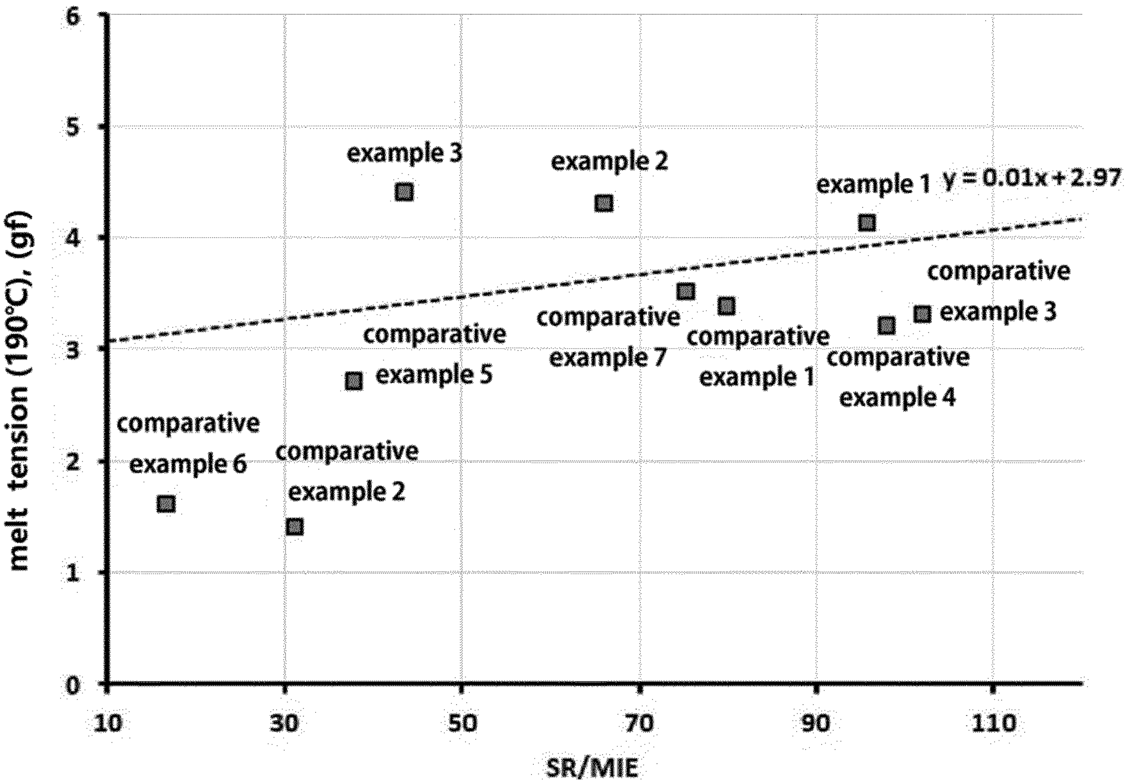
melt tension (190°C), (gf)
SR/MIE
example 3
example 2
example 1
y = 0.01x + 2.97
comparative example 3
comparative example 7
comparative example 1
comparative example 4
comparative example 5
comparative example 6
comparative example 2
0
1
2
3
4
5
6
10
30
50
70
90
110

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220124015
- US 4461873 A


### Non-patent literature cited in the description


- *Journal of molecular structure,* 1999, vol. 485 (486), 569-584
- *The Journal of Physical Chemistry,* 1980, vol. 84, 649
- *Macromolecules,* 2010, vol. 43, 8836-8852